# EUROPEAN PATENT APPLICATION

(11) **EP 1 084 615 A2**
(43) Date of publication of application: **21.03.2001**
(21) Application number: 00308020.7
(22) Date of filing: 14.09.2000
(51) Int. Cl.: A01K 61/00

(54) **Apparatus for the production of pearls**

(30) Priority: 14.09.1999 NZ 33780799; 17.11.1999 NZ 50117699
(71) Applicant: Aotearoa Pearls Ltd., Christchurch (NZ); Langdon, Richard William Newnman, Kaikoura (NZ)
(72) Inventor: Govan, Bradley David, Christchurch (NZ)
(74) Representative: Vinsome, Rex Martin

(57) **Abstract**

A nucleus (2, 102, 202) for producing blister or mabé pearls (10) in molluscs is disclosed. The nucleus (2, 102, 202) is generally bell-shaped with a dome (7) and a peripheral edge portion (8). The surface of the peripheral edge portion (8) and some or all of the dome (7) includes one or more steps (9) which start at or adjacent the outer edge. The steps (9) assist by providing a key for the deposition of nacre The nucleus (2, 102, 202) may be secured to the shell (3) of the mollusc in a variety of ways. The nucleus (2, 102, 202) may include a tail (206) which is pulled through the shell (3). The mollusc is preferably selected from oysters, mussels and abalone.

## Description

### TECHNICAL FIELD

The present invention relates generally to a nucleus for producing pearls in molluscs. More particularly the present invention relates to a nucleus for producing pearls in oysters, mussels, abalone or gastropods of the genus *haliotis,* most preferably New Zealand paua (being a subspecies thereof).

### BACKGROUND ART

US patent 5,347,951 to Fankboner details a process for artificially producing hemispherical "blister" pearls or "mabé" pearls in abalone. The process involves drilling a hole in the shell of the abalone, and inserting an artificial rounded nucleus (or "mabé") which protrudes into the inside of the shell. The abalone then coats the intruding nucleus with layers of coloured nacre and sticky conchiolin to produce a pearl. When the abalone is harvested the pearl and nucleus are cut out of the shell. The nucleus is then removed from the pearl and the hollow side of the pearl is filled with a resin or other filler, to which is affixed a backing of abalone mother of pearl (not shown).

In practice this process results in pronounced variations in the thickness of the pearl coating at different sections of the nucleus. A typical blister pearl of between 2 and 20 mm in diameter has a thickness of 2 mm at the base of the nucleus (nearest the shell) and only half a millimetre at the crown. This thin translucent crown is very fragile and vulnerable to damage when working with the pearl or when it is worn.

The nucleation of the pearl starts with a build-up of nacre at the base of the nucleus before the crown of the pearl is laid down. This build-up is relatively thick and can take the mollusc a number of months to manufacture, however it is not necessary to the shape of the finished pearl.

A further disadvantage of this known shape of nucleus is that the mollusc starts laying down nacre where there is a hollow between the shell and the nucleus. There is nothing in the shape of the nucleus which encourages the mollusc to extend the layer of nacre up and over the nucleus.

This problem is partially addressed in published international patent application WO 9925185. This disclosure provides a nucleus with a smooth, ramped transition from the shell of the mollusc to the top of the hemispherical portion of the nucleus. However, as with a standard hemispherical bead there is nothing for the mollusc to key or anchor nacre to as the nacre is deposited. Thus whilst this invention provides improvements over earlier nuclei, it does not produce most favourable conditions for the molluscs to commence nacre deposits on the nucleus.

An object of the present invention is the provision of apparatus for growing pearls which overcomes the above described disadvantages of known nuclei, to produce pearls.

Further aspects and advantages of the present invention will become apparent from the ensuing description, which is given by way of example only.

### DISCLOSURE OF INVENTION

According to one aspect of the present invention there is provided a nucleus for the production ofa blister or mabé pearl in a mollusc, the said nucleus including a generally bell-shaped surface adapted for the deposition of nacre thereupon, the said surface including a dome and a peripheral edge portion which is adapted to meet an inner face of the mollusc; wherein the said peripheral edge portion includes an outer defining edge, and said surface further includes one or more steps which start at or adjacent said outer edge.

According to another aspect of the present invention there is provided a nucleus for the production of a blister or mabe pearl in a mollusc, substantially as described above, wherein said steps stop below the said dome and wherein the dome has a substantially smooth surface. Alternatively, the said steps stop part way up the dome or continue over all the dome.

Such steps over some or all of the nucleus (but over the peripheral edge portion) better provide for the deposition of the nacre, as it is more readily 'keyed' by the mollusc. Deposition therefore occurs faster than occurs with a prior art nucleus.

According to another aspect of the present invention there is provided a nucleus for the production of a blister or mabe pearl in a mollusc, substantially as described above, wherein the steps includes flats and risers that are planar.

According to another aspect of the present invention there is provided a nucleus for the production of a blister or mabe pearl in a mollusc, substantially as described above, wherein the steps include flats and risers and at right angles one to the other.

Preferably, the risers of said steps are of a substantially constant dimension. Alternatively the steps diminish in height as they move further away from the peripheral edge of the nucleus.

A further advantage of either variant is that the steps allow close conformity of the actual surface of the nucleus to the general bell shape.

According to another aspect of the present invention there is provided a nucleus for the production of a blister or mabe pearl in a mollusc, substantially as described above, wherein the nucleus in plan is of a shape selected from: circular; oval; rectangular; square; teardrop; and ovoid. Preferably also the cross-sectional shape of the dome is arcuate. More preferably this shape is hemispherical.

With the above features and characteristics it has been found that the range of size of each nucleus varies between 4 to 50 mm. More preferably this is between 8 to 14 mm. Also in practice it has been found that the height of the nucleus, at the highest point is 20 mm.

The number of steps will depend on the size of the nucleus and whether the steps continue over part or all of the dome. In practice it has been found that the a minimum of three steps on the smallest size nucleus is still effective. The maximum number is optionally 100. The step height may also vary, depending on the size of the nucleus, but is preferably in the range 0.1 to 0.5 mm. Larger or smaller sizes, and a variety of sizes on each nucleus may be used also.

Preferably, the nucleus is made from a material selected from: plastics, metal, glass and a combination thereof.

According to another aspect of the present invention there is provided a nucleus for the production of a blister or mabé pearl in a mollusc, substantially as described above, wherein the nucleus further includes a base formed integrally with the remaining parts of the nucleus, said base being capable of forming a water-tight seal with the shell of the mollusc, when the nucleus is fitted to the mollusc.

According to another aspect of the present invention, there is provided a method of fitting the nucleus described above to the shell ofthe mollusc, said method including selecting from:
cutting a hole in the shell and gluing, press-fitting or screw threading the nucleus to the shell; and
gluing the nucleus to the inside of the shell.

According to another aspect of the present invention, there is provided a method of growing a pearl in a mollusc, said method including the steps of:
fitting the nucleus, of the type described above, into the living mollusc by the method described above, and
allowing the mollusc to continue growing nacre to cover said nucleus.

According to another aspect of the present invention there is provided a nucleus for the production of a blister or mabé pearl in a mollusc, substantially as described above, wherein the nucleus also includes a base with a tail which passes through a small hole in the shell of the mollusc. The tail is pulled through the shell to seat the nucleus against the inside of the shell and to provide a water-tight seal.

According to another aspect of the present invention, there is provided a method of growing a pearl in a mollusc, said method including the steps of:
cutting a hole in the shell of a living mollusc;
fitting the nucleus with a base and a tail, of the type described above, into the mollusc by inserting the tail through the hole and settling the nucleus against the inside of the mollusc with the tail under tension, and releasing the tail, and
allowing the mollusc to continue growing until nacre covers said nucleus.

The method of insertion of the nucleus may depend on a number of factors. For example, the mollusc selected; the size of the nucleus, the number of nuclei being inserted and the shape of the or each nucleus. Another factor will be whether the mollusc has previously been used for growing an insert, which insert has been harvested, leaving a hole in the shell.

Another aspect of the present invention is the provision of an nucleus as described above wherein the mollusc is selected from: mussels, oysters, and the abalone family. More preferably, the mollusc is a New Zealand paua. Optionally, more than one nucleus may be inserted by one or other of the above methods of insertion into one mollusc.

According to another aspect of the present invention, there is provided a method of harvesting a pearl from a mollusc, said method including the steps of:
growing one or more pearls in a mollusc by either of the methods described above;
removing the or each nucleus and respective covering nacre.

Optionally, the mollusc is fully harvested at the time of harvesting of the pearls by harvesting the meat of the mollusc.

According to a still further aspect of the present invention, there is provided one or more pearls grown and harvested in accordance with the above described method of growing and harvesting a pearl from a mollusc.

### BRIEF DESCRIPTION OF DRAWINGS

Further aspects of the present invention will become apparent from the following description which is given by way of example only, and with reference to the accompanying drawings in which:
Figure 1 is a cross-section of a first preferred embodiment of a nucleus according to the present invention;
Figure 2 is a detail view of one part of the cross-section of the first preferred embodiment of a nucleus according to the present invention;
Figure 3 is a cross-section of a second preferred embodiment of a nucleus according to the present invention;
Figure 4 is a cross-section of a third preferred embodiment of a nucleus according to the present invention; and
Figure 5 is a cross-section of a finished blistered pearl made in accordance with the preferred method of the present invention.

### BEST MODES FOR CARRYING OUT THE INVENTION

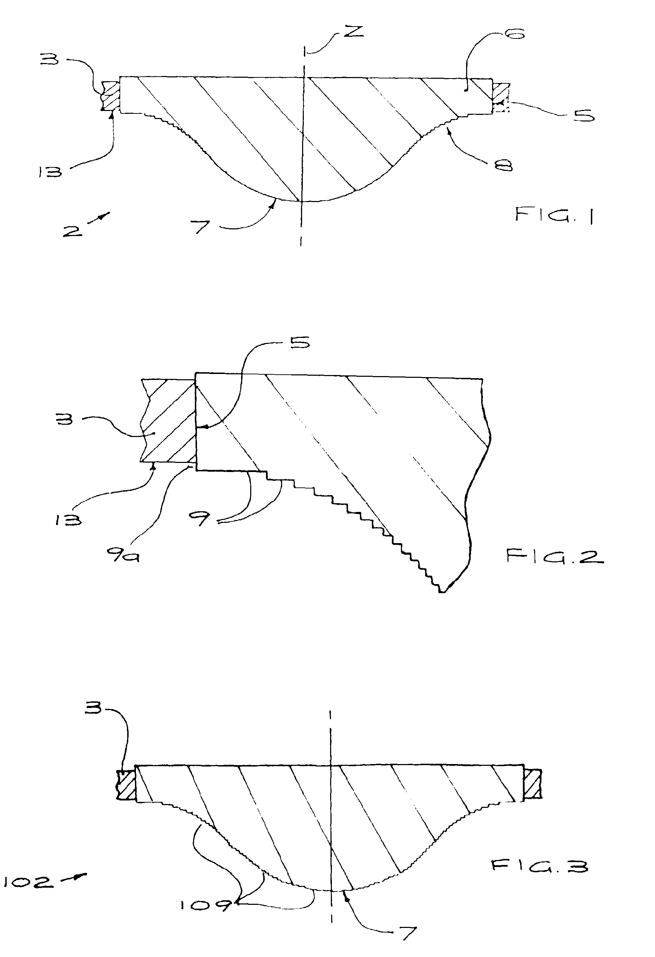

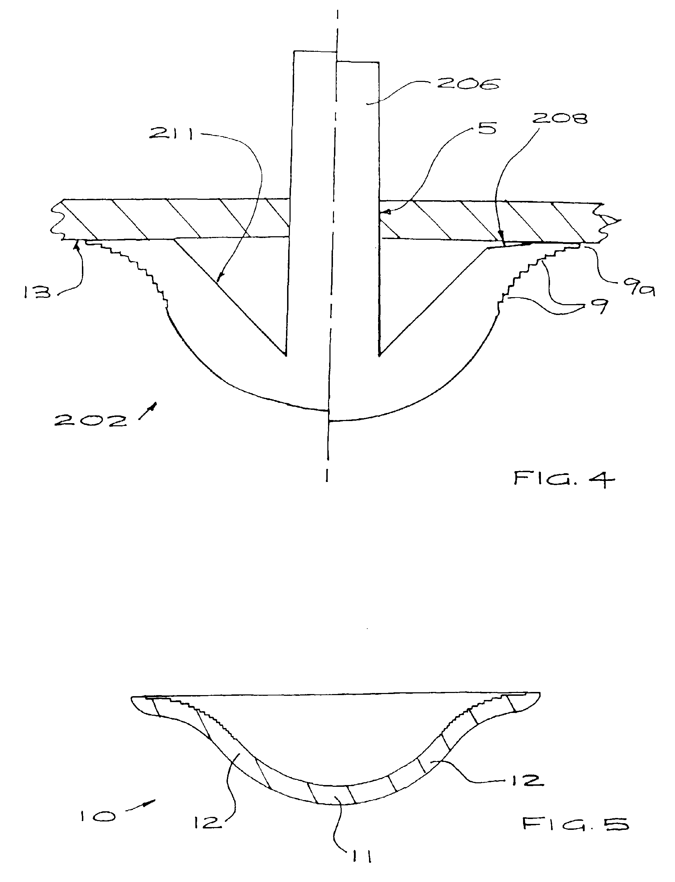

Referring to Figs 1 and 2, there is thereshown a first preferred embodiment of the nucleus 2 of the present invention fitted in the shell 3 of a New Zealand paua. The nucleus 2 includes a base 6 secured and a peripheral edge 5 secured into an aperture (not shown) in the shell 3. The base 6 may be secured by known means and a water-tight seal is provided between the nucleus 2 and the water surrounding the paua in its growing medium.

The nucleus 2 includes a bell-shaped surface disposed toward the inside of the paua, onto which nacre is deposited. The surface comprises a fillet section 8 contiguous with a dome 7. The fillet section 8 smoothly joins the nucleus 2 to the inner surface 13 of the shell 3. The nucleus 2 is symmetrical about central axis Z and in a transverse section perpendicular to axis Z, the nucleus is circular in shape. If so desired, the shape of the nucleus 2 in this transverse section may be rectangular, square, teardrop, oval, ovoid or any other desired shape. The surface over the dome 7 and part of the fillet 8 immediately adjacent the dome 7 are substantially smooth.

Referring to Fig. 2, the area of the fillet 8 closest to the inside face 13 of the shell 3, includes a plurality of steps 9, the average outline of which forms the lower part of the campanulate surface of the nucleus 2. The steps 9 include risers and flats that are at right angles to adjacent respective flats and risers. If so desired, the angle of the risers and flats may vary from 90 degrees, to form corrugations. The steps 9 start immediately adjacent the edge 5, and a first step 9a may be formed where the edge 5 and the inner surface 13 meet. The height of the risers is constant along the fillet surface 8 toward the dome 7, but the length of the flats decreases.

The risers and flats are shown in Figs. 1 and 2 as planar. However, it will be appreciated that the risers and flats may be curved, and at an angle other than 90 degrees to each other. This gives the appearance more of rising corrugations, than steps.

The nucleus 2 is sized in the range 4 to 50 mm. The most common size range is 8 to 14 mm The dome 7 is hemispherical or part spherical, and up to 20 mm in height.

The number of steps 9 varies, preferably from three upward. The number of steps 9 will depend on the size of the nucleus 2 and whether the steps 9 continue over all of the surface of the dome 7, as well as the peripheral edge 5. The height of the steps 9 varies between 0.1 to 0.5 mm. It is most commonly between 0.1 and 0.2 mm.

A water tight seal between the shell 3 and the nucleus 2 may be achieved by an interference fit between the peripheral edge 5 and the aperture in the shell. Alternatively, the base 6 and the shell 3 may be threaded so that the nucleus 2 is screw-threaded, in known manner, into the hole 5 in the shell 3. Other methods of forming a water-tight seal (for example, providing a water tight seal over the top of the nucleus 2, once in position) can be used as alternatives to the above described methods, as is desired.

The nucleus 2 may be of any appropriate material. For example, if a threading is to be added to the base 6, a rigid plastics material is used. The material may be a flexible material, for example a polymer plastics, natural rubber, and synthetic rubber etc. The nucleus 2 may be co-extruded of two plastics.

Whilst the paua has been described as having one nucleus 2, it will be appreciated that, depending on the size of the desired pearl 10 (Fig. 5), the size of the paua (in turn, a factor, depending on age of the paua), two or more nuclei 2 may be inserted into the one paua. For example, it is possible, in older paua, to insert 10 or more nuclei 2

Referring to Fig. 3, a second preferred embodiment of the nucleus 102 is shown. Like numbered parts are identical to those described above for the first embodiment of the nucleus 2. The nucleus 102 includes steps 109, having risers of constant height which continue up the sides and to the top of the dome 7, so that the nucleus 102 is substantially covered in steps 109.

The above nucleus 2, 102 has been described with reference to a base 6 that is the same size as the hole cut in the shell 3. However it will be appreciated that the nucleus 2, 102 may be anchored to the inside of the shell 3 in a number of different ways. For example, the flesh of the paua may be eased back from the site to which it is to be secured, and the nucleus 2 glued into place.

Referring to Figure 4 a third preferred embodiment of the nucleus 202 is shown. Like numbered parts are identical to those described above for the first embodiment of the nucleus 2. The nucleus 202 includes a base 206 in the form of a tail. The nucleus 202 also includes an angular under face 211. The edge 208 of the nucleus 202 is slightly cut away, as the nucleus 202 is seated against the inside face 13 the edge 208 flattens against the shell 3 to provide a seal for the nucleus 202. The nucleus 202 is flattened by pulling on the tail of the base 206 to locate the nucleus 202. The outer campanulate surface of the nucleus 202 includes step 9, as per the first preferred embodiment of the invention.

In use the nucleus (2, 102, 202) is inserted in an aperture made in the shell 3 forming a water tight seal. The paua starts laying down nacre, starting with the step 9, 109 closest to the base 6 and inner surface 13 of the shell 3. As each flat is covered by nacre and filled to the height of the next riser, the nacre than is laid down over the next flat. This process continues until the steps 9, 109 are all covered and the paua continues to deposit nacre across the steps 9, 109 along the remainder of the fillet 8 and up to, and over, the dome 7 of the nucleus 2, 102.

Referring to Fig. 5, a blister pearl 10 is thereshown. The pearl 10 is a finished pearl 10 produced by the method using the nucleus 2 according to the first preferred embodiment of the invention. The shape and the interior surface of the pearl 10 are a complementary shape to that of the shape and exterior surface of the nucleus 2, showing a reflected shape of the steps 9, the remainder of the fillet 8 and the dome 7. The thickness of the nacre is approximately even over the top 11 of the pearl 10, and down the sides 12. The nucleus (2, 102, 202) produces pearls 10 with a smooth exterior surface, regardless of the interior outline of the pearl 10.

The method of growing of each pearl 10 continues over a period of between 6 months and 2 years, depending on the size of the nucleus and the desired thickness of nacre over the dome 7. When the blister of nacre over the nucleus 2 is at the desired thickness, the nucleus 2 and respective nacre are cut from the paua. The pearl 10 is then harvested, finished, polished and set in known manner.

Aspects of the present invention have been described by way of example only and it should be appreciated that modifications and additions may be made thereto without departing from the scope thereof.

## Claims

1. A nucleus (2, 102, 202) for the production of a blister or mabé pearl (10) in a mollusc, the said nucleus (2, 102, 202) including a generally bell-shaped surface adapted for the deposition of nacre thereupon, the said surface including a dome (7) and a peripheral edge portion (8) which is adapted to meet an inner face (13) of the mollusc; wherein the said peripheral edge portion (8) includes an outer defining edge (5), and said surface further includes one or more steps (9) which start at or adjacent said outer edge (5).

2. A nucleus (2, 102, 202) as claimed in claim 1 wherein said steps (9) cover a part of the bell shaped surface of the nucleus (2, 102, 202), said covering being selected from:
the peripheral edge portion (8); or
the peripheral edge portion (8) and a portion of the dome (7); or
the peripheral edge portion (8) and all of the dome (7).

3. A nucleus (2, 102, 202) as claimed in either claim 1 or claim 2 wherein the steps (9) have features selected from the following:
(a) each step (9) includes a flat and a riser that are planar;
(b) the steps (9) are at right angles to adjacent risers and flats; and
(c) the dimension of the risers is constant.

4. A nucleus (2, 102, 202) as claimed in any one of the preceding claims wherein the nucleus (2, 102, 202) has features selected from:
(a) the nucleus (2, 102, 202) is, in plan, of a shape selected from: circular, oval, rectangular, square, ovoid, and tear drop;
(b) the dome (7) in cross section is arcuate;
(c) the size range of the nucleus (2, 102, 202) is between 4 and 50 millimeters;
(d) the size range of the nucleus (2, 102, 202) is between 8 and 14 millimetres; and
(e) the height of the dome (7) from the shell (3) is 20 millimetres.

5. A nucleus (2, 102, 202) as claimed in any one of the preceding claims wherein the steps (9) have features selected from:
(a) the number of steps (9) is at least three;
(b) the range of heights of any one step (9) is between 0.1 and 0.5 millimetres; and
(c) the range of heights of any one step (9) is between 0.1 and 0.2 millimetres.

6. A nucleus (2, 102, 202) as claimed in any one of the preceding claims wherein said nucleus (2, 102, 202) is made from a material selected from: one or two plastics, metal, glass and a combination of these.

7. A nucleus (2, 102, 202) as claimed in any one of the preceding claims wherein said mollusc is selected from: mussels, oysters, and the abalone family.

8. A nucleus (2, 102, 202) as claimed in claim 7 wherein said mollusc is a New Zealand paua.

9. A nucleus (2, 102) as claimed in any one of the preceding claims wherein the nucleus (2, 102) further includes a base (6) formed integrally with the remaining parts of the nucleus (2, 102), said base (6) being capable of forming a water-tight seal with the shell (3) of the mollusc, when the nucleus (2, 102) is fitted to the mollusc.

10. A nucleus (202) as claimed in any one of claims 1 to 8 wherein the nucleus (202) includes a base (206) and a tail which passes through a small hole in the shell (3) of the mollusc, said base (206) being formed integrally with the remaining parts of the nucleus (202) and capable of forming a water-tight seal with the shell (3) of the mollusc, when the nucleus (202) is fitted to the mollusc.

11. A method of growing a pearl (10) in a mollusc, said method including the steps of:
providing a nucleus (2, 102) as claimed in any one of claims 1 to 9;
cutting a hole in the shell (3) and gluing, press-fitting or screw-threading the nucleus to the shell (3); or gluing the nucleus (2, 102) to the inside (13) of the shell (3); and
allowing the mollusc to continue growing nacre to cover said nucleus (2, 102).

12. A method of growing a pearl (10) in a mollusc, said method including the steps of:
providing a nucleus (202) as claimed in claim 10;
cutting a hole in the shell (3) of a living mollusc;
fitting the nucleus (202) with a base (206) and a tail into the mollusc by inserting the tail through the hole and settling the nucleus (202) against the inside of the mollusc with the tail under tension, and releasing the tail, and
allowing the mollusc to continue growing until nacre covers said nucleus (202).

13. A method of harvesting a pearl (10) from a mollusc, said method including the steps of:
growing one or more pearls (10) in a mollusc by the method of either claim 11 or 12; and
removing the or each nucleus (2, 102, 202) and respective covering nacre.

14. A pearl (10) grown in a manner selected from the following:
(a) on a nucleus (2, 102, 202) as claimed in any one of claims 1 to 10;
(b) by the method as claimed in either claims 11 or 12;.
(c) by the method of harvesting as claimed in claim 13.
